# EUROPEAN PATENT APPLICATION

(11) **EP 4 748 662 A1**
(43) Date of publication of application: **27.05.2026**
(21) Application number: 24215223.9
(22) Date of filing: 25.11.2024
(51) Int. Cl.: B60T 7/12, B60T 8/17, B60T 8/171, B60T 8/172, B60T 8/1763, B60T 13/74, B61H 5/00, B61H 7/08, B61H 13/00, F16D 55/224, F16D 63/00, F16D 66/00, F16D 121/20, F16D 121/24

(54) **BRAKING SYSTEM FOR A RAIL VEHICLE, COMPUTER-IMPLEMENTED METHOD OF DECELERATING A RAIL VEHICLE, COMPUTER PROGRAM AND NON-VOLATILE DATA CARRIER**

(71) Applicant: Dellner Bubenzer AB, 781 70 Borlänge (SE)
(72) Inventor: LENNARTSSON, Svante, 791 46 FALUN (SE); LARSSON, Lennart, 602 13 NORRKÖPING (SE); LUNDELL, Anders, 443 32 LERUM (SE); PRIM, Viktor, 811 61 SANDVIKEN (SE); SVEDER, Patrik, 784 75 BORLÄNGE (SE); GUSTAVSSON, Claes-Göran, 723 53 VÄSTERÅS (SE); JÖNSSON, Per-Anders, 183 39 TÄBY (SE)
(74) Representative: Brann AB

(57) **Abstract**

A rail vehicle (100) braking system has a magnetic track brake controller (160) that receives a brake command (cmd_{B}) and in response thereto sends a first control signal (M) to a magnetic track brake unit (170). As a result, an electrically operated drivetrain (171, 172) causes a magnetic track brake device (173) to move from an idle position (PI) to an engaged position (PE) in which the magnetic track brake device (173) either has a zero-distance to the rail (110) upon which the rail vehicle (100) travels, or has a non-zero distance thereto and a magnetic flux (F_{M}) is produced through the magnetic track brake device (173) and the rail (110) so that an attractive force between the rail vehicle (100) and the rail (110) is increased.

## Description

### TECHNICAL FIELD

The present invention relates generally to deceleration control of rail vehicles. Especially, the invention relates to a braking system for a rail vehicle as defined in claim 1, and a corresponding computer-implemented method of decelerating such a rail vehicle. The invention also relates to a computer program and a non-volatile data carrier storing such a computer program.

### BACKGROUND

A rail vehicle's brakes are employed to control the deceleration of the rail vehicle and to implement a parking brake function. Typically, the same brakes are also used for service braking and emergency braking. Moreover, a so-called magnetic track brake may be employed for improved braking capability, especially in connection with emergency braking. The magnetic track brake, also known as an Mg brake, includes magnet coils, pole shoes, a suspension and a power transmission. When an electric current flows through the magnet coil, the magnet coil is attracted to the rail. This presses the pole shoes against the rail and thereby the rail vehicle decelerates.

GB 2 375 802 discloses a braking system for rail vehicles that has a housing in which is mounted an electro-magnet that is held in a parked/ standby position in line with and just above the rail by two bolts and springs. Above the electro-magnet are two horizontally mounted solenoids with push rods arranged in such a way that when the solenoids are energized the electro-magnet is pushed down against the springs, the electro-magnet which is energized at the same time is pulled onto the rail by magnetism, and will remain clamped to it while the braking system is switched on.

When the braking system is switched off the electro-magnet and the solenoids become inactive and the electro-magnet will be retracted by the springs to the standby position. Control and monitoring wiring circuits are disclosed, switches detecting the system status. A sounder to prevent the system being left on accidentally, and emergency lighting may be provided.

US 9,278,701 describes a brake control device for a brake system of a rail vehicle, wherein the brake control device is designed to control at least one electromagnetic track brake device of the brake system on the basis of rail condition data. Also disclosed is a corresponding brake system, a rail vehicle, and a corresponding method.

US 2006/0060434 reveals a magnetic rail brake for a rail vehicle of the type that comprises a magnet supported from the rail vehicle a small distance above the rail. The magnet is supported by springs which are overridden on actuation of the magnet. A guide assembly guides the magnet for movement in a substantially vertical plane while allowing limited lateral movement. The magnet is provided with an extension arm arranged to contact the rail vehicle at a distance from the magnet which is substantially greater than either the maximum extent of vertical movement or the maximum extent of lateral movement. By controlling the motion of the extension arm within these limits of lateral and vertical motion, unwanted and excessive tilting of the magnet can be avoided.

US 3,931,869 shows a braking device for railroad bogie running at high speed that comprises a fixed part integrally connected to the frame of the bogie and a movable part suspended from the fixed part and adapted to be vertically displaced by suitable means towards a rail. The movable part is provided at its lower face with a series of electromagnets arranged above the rail. The series of electromagnets is flanked at each of its sides with a braking shoe adapted to be applied on the rail at the moment of braking in such a way that the electromagnets be placed at a relatively small distance from the rail. Means are provided for controlling the position of the braking shows as a function of the wearing of the shoe.

Thus, various solutions are known for controlling magnetic track brakes. These solutions, however, only allow a relatively coarse controlling of the brake function. In principle, the magnetic track brake is either on or off, and in the on-mode the rail is subjected a substantial mechanical stress that risks deteriorating or damaging the infrastructure components, e.g. its switches and rail joints.

### SUMMARY

The object of the present invention is therefore to offer an improved solution that solves the above problems and enables a dynamic and flexible magnetic-track-brake functionality that is significantly less harmful to the track infrastructure.

According to one aspect of the invention, the object is achieved by a braking system for a rail vehicle. The braking system includes a magnetic track brake controller and a magnetic track brake unit. The magnetic track brake controller is configured to receive a brake command and in response thereto generate a first control signal. The magnetic track brake unit, in turn, includes an electrically operated drivetrain and a magnetic track brake device. The electrically operated drivetrain is configured to receive the first control signal and based thereon move the magnetic track brake device from an idle position to an engaged position. In the idle position, the magnetic track brake device is at a first distance from a rail upon which the rail vehicle travels and in the engaged position the magnetic track brake device is at a second distance from the rail, which second distance is shorter than the first distance.

The above braking system is advantageous because it enables an adaptive and fine-tuned control of a magnetic track brake, such that the magnetic track brake may be used in a highly efficient manner that does not risk damaging the track infrastructure.

According to one embodiment of this aspect of the invention, the braking system further contains a brake controller and a brake unit. The brake controller is also configured to receive the brake command and in response thereto generate a second control signal. The brake unit, in turn, includes an electric motor, a gear arrangement and at least one pressing member, e.g. a pair of calipers. The brake unit is configured to receive the second control signal and based thereon cause the electric motor to act on the gear arrangement, such that the at least one pressing member applies a braking force to a rotatable member that is mechanically linked to at least one wheel of the rail vehicle so as to reduce a rotation speed of the at least one wheel. This is embodiment of the invention is advantageous because it enables blending the magnetic track braking with conventional wheel braking to variable degrees in a seamless manner.

According to one embodiment of this aspect of the invention, the magnetic track brake controller is configured to generate the first control signal such that in the engaged position, the second distance is larger than zero, and an electric current is passed through an inductive coil element of the magnetic track brake device. The electric current produces a magnetic flux through the magnetic track brake device and the rail, thus increasing an attractive force between the rail vehicle and the rail. This, in turn, enhances an adhesion between the wheels and the rail, so that for example the wheel brakes of the rail vehicle may be employed at a higher degree of efficiency. Of course, the same is true also for traction, i.e. the inductive coil element of the magnetic track brake device may equally well be used in this manner to improve the traction when accelerating the rail vehicle.

According to another embodiment of this aspect of the invention, the magnetic track brake controller is configured to generate the first control signal such that in the engaged position the second distance is zero, and no electric current is passed through an inductive coil element of the magnetic track brake device. As a result, for example leaves, debris and similar may be scraped off the rails in a straightforward manner.

According to another embodiment of this aspect of the invention, the magnetic track brake unit further includes a force sensor configured to produce a pressure signal indicating a magnitude of a force at which the magnetic track brake device contacts the rail when the magnetic track brake device is in the engaged position and the second distance is zero. The magnetic track brake unit also includes a position sensor configured to produce a positioning signal reflecting a distance that the electrically operated drivetrain has moved from a particular position. Here, the magnetic track brake controller is configured to obtain the pressure signal and the positioning signal. Based thereon, the magnetic track brake controller is configured to define the idle position for the magnetic track brake device, for example by using the positioning signal as a reference in relation to when the pressure signal indicates a particular force magnitude.

According to one embodiment of this aspect of the invention, at the idle position, the first distance represents such a positioning of the electrically operated drivetrain that, from the idle position, the magnetic track brake device is moveable to the engaged position where the second distance is zero by controlling the electrically operated drivetrain to move the magnetic track brake device in a first direction until the positioning signal indicates that the magnetic track brake controller has moved a first predefined distance.

According to another embodiment of this aspect of the invention, the magnetic track brake controller is configured to control the magnetic track brake device to the engaged position where the second distance is larger than zero by controlling the electrically operated drivetrain to move in the first direction until the positioning signal indicates that the magnetic track brake controller has moved a second predefined distance, which is smaller than the first predefined distance. In other words, there is a shorter travel distance for the magnetic track brake device from the idle position to the engaged position where the second distance is larger than zero that to the engaged position where the second distance is zero.

According to yet another embodiment of this aspect of the invention, in addition to or as an alternative to the above, the magnetic track brake controller is configured to define the idle position by executing the steps: (a) controlling the electrically operated drivetrain to move the magnetic track brake device in the first direction until the pressure signal exceeds a first threshold value; thereafter (b) controlling the electrically operated drivetrain to stop; and subsequently (c) retracting the magnetic track brake device from the rail by controlling the electrically operated drivetrain to move the magnetic track brake device in a second direction that is opposite to the first direction until the positioning signal indicates that the magnetic track brake controller has moved the first distance in the second direction. Thus, it is uncomplicated to effect wear compensation, so that the travel distance for the magnetic track brake device to each of the engaged positions remains the same notwithstanding any wear of the magnetic track brake device.

According to still another embodiment of this aspect of the invention, wherein between steps (b) and (c), the magnetic track brake controller is configured to retract the magnetic track brake device from the rail until the pressure signal falls below a second threshold value that is lower than the first threshold value. For instance, the first threshold value may represent a fairly high force and the second threshold value may represent at force being just slightly above zero. In such a case, the distance at which the pressure signal falls below a second threshold value may serve as a reference level for the engaged position where the magnetic track brake device is at the zero-distance from the rail.

According to embodiments of this aspect of the invention, the force sensor includes a load cell and/or a wire strain gauge. The force sensor may further be included in the electrically operated drivetrain, and/or the electrically operated drivetrain may include an electric motor, which, in turn, may be combined with the position sensor. Alternatively, or additionally, the position sensor may form a component that is separate from the electrically operated drivetrain. Thus, the implementation of the brake system may be varied over a wide range of alternatives.

Further, according to one embodiment of this aspect of the invention, the position sensor contains an LVDT (linear variable displacement/differential transformer/transducer) sensor, a linear potentiometer and/or an optical position sensor. Each of these technologies enables high-accuracy registering of movements in rugged environments.

According to yet another embodiment of this aspect of the invention, the brake unit further includes at least one auxiliary sensor configured to produce a feedback signal, which is indicative of at least one adhesion parameter of a contact interface between the at least one wheel and the rail while the at least one pressing member applies the braking force to the rotatable member that is mechanically linked to the at least one wheel. Here, the magnetic track brake controller is also configured to receive the feedback signal, and on the further basis thereof generate the first control signal. This, in turn, enables a highly efficient overall control of the braking system.

For instance, the feedback signal may be indicative of an estimated friction coefficient between the at least one wheel and the rail. If the estimated friction coefficient subceeds a first threshold level, the magnetic track brake controller may be configured to generate the first control signal such that the magnetic track brake device attains the engaged position where the second distance is larger than zero and the electric current is passed through the inductive coil element of the magnetic track brake device, where the electric current produces the magnetic flux through the magnetic track brake device and the rail so that the attractive force between the rail vehicle and the rail increases. In other words, the magnetic track brake device may be controlled in response to the dynamic friction currently experienced by the wheels, such that the wheels' grip is improved when needed.

According to one embodiment of this aspect of the invention, when the magnetic track brake device is in the engaged position where the second distance is larger than zero, the magnetic track brake controller is configured to generate the first control signal so that the electric current being passed through the inductive coil element of the magnetic track brake device has such a value that a magnitude of the magnetic flux through the magnetic track brake device and the rail is varied as a function of how much the estimated friction coefficient subceeds the first threshold level. Hence, the wheel grip may be varied adaptively in response to variations in the friction coefficient.

According to another embodiment of this aspect of the invention, if the estimated friction coefficient subceeds a second threshold level, which, for example, is above the first threshold level, the magnetic track brake controller may be configured to generate the first control signal such that the magnetic track brake device attains the engaged position where the second distance is zero and no electric current is passed through the inductive coil element of the magnetic track brake device. As a result, the rail can be cleared from leaves and/or debris as an initial adhesion improving measure. Should this prove to be insufficient, the above-mentioned adaptive control of the magnetic track brake device may be applied as a next step.

According to embodiments of this aspect of the invention, the brake command may represent: an operator-initiated service brake request, an operator-initiated parking brake request, an operator-initiated emergency brake request, an automatically activated service brake request, an automatically activated parking brake request, or an automatically activated emergency brake request. In other words, the proposed system is useful in all kinds of rail vehicle braking scenarios.

According to one embodiment of this aspect of the invention, if the brake command represents an emergency brake request that is either automatically activated or initiated by an operator, e.g. a driver or a passenger, the brake controller is configured to generate the first control signal such that the brake unit controls the at least one pressing member to apply a maximum braking force to the rotatable member that is mechanically linked to the at least one wheel. Moreover, the magnetic track brake controller is configured to generate the first control signal such that the magnetic track brake device attains the engaged position where the second distance is zero and such an electric current is passed through the inductive coil element that a maximum magnetic flux is produced through the magnetic track brake device and the rail. Thus, an extremely strong overall brake force may be exerted.

According to another aspect of the invention, the object is achieved by a computer-implemented method of decelerating a rail vehicle including a magnetic track brake controller and a magnetic track brake unit. The method involves receiving a brake command in the magnetic track brake controller, and in response thereto generating a first control signal. The first control signal is received in the magnetic track brake unit, and in response thereto, the magnetic track brake unit controls an electrically operated drivetrain of the magnetic track brake unit to move the magnetic track brake device from an idle position to an engaged position. In the idle position, the magnetic track brake device is at a first distance from a rail upon which the rail vehicle travels and in the engaged position the magnetic track brake device is at a second distance from the rail, which second distance is shorter than the first distance.

The advantages of this method, as well as the preferred embodiments thereof are apparent from the discussion above with reference to the proposed control unit.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates a rail vehicle in which a first embodiment of the braking system according to the invention is implemented;
- Figure 2: schematically illustrates a rail vehicle in which a second embodiment of the braking system according to the invention is implemented;
- Figures 3a-b: illustrate the idle position and the two engaged positions for the magnetic track brake device according to embodiments of the invention;
- Figure 4: shows a schematic block diagram of the brake controller according to one embodiment of the invention;
- Figures 5a-b: illustrate the signals exchanged between the magnetic track brake controller and the magnetic track brake unit according to embodiment of the invention when the magnetic track brake device is in the respective two engaged positions;
- Figure 6: shows a diagram illustrating how a pressure signal indicating a force at which the magnetic track brake device is pushed against the rail may vary over time according to embodiment of the invention;
- Figure 7: shows a diagram illustrating how an estimated friction coefficient may vary over time, and how, in response to that, the magnetic track brake device is controlled according to one embodiment of the invention;
- Figure 8: illustrates, by means of a flow diagram, the general method according to the invention; and
- Figure 9: Shows a flow diagram of the method according one embodiment of the invention.

### DETAILED DESCRIPTION

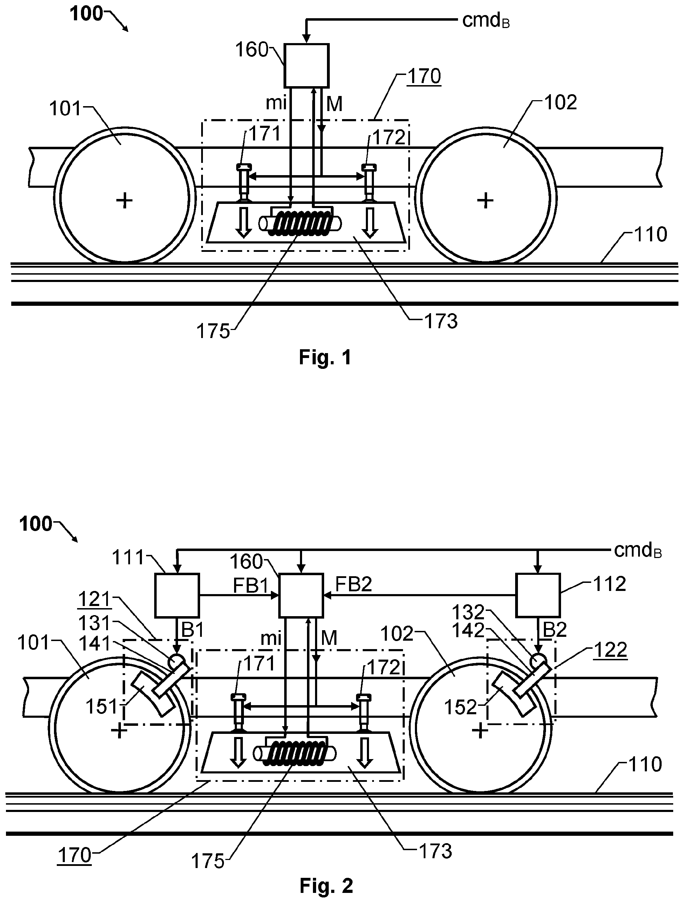

In Figure 1, we see a schematic illustration of a rail vehicle 100 that includes a first embodiment of the system according to the invention.

The braking system contains at least one magnetic track brake controller, here exemplified by 160, and at least one magnetic track brake unit, here exemplified by 170.

The magnetic track brake controller 160 is configured to receive the brake command cmd_{B} and in response thereto generate a first control signal M. The magnetic track brake unit 170 includes an electrically operated drivetrain, here exemplified by a pair of cylinder-push rod devices 171 and 172 respectively and a magnetic track brake device 173.

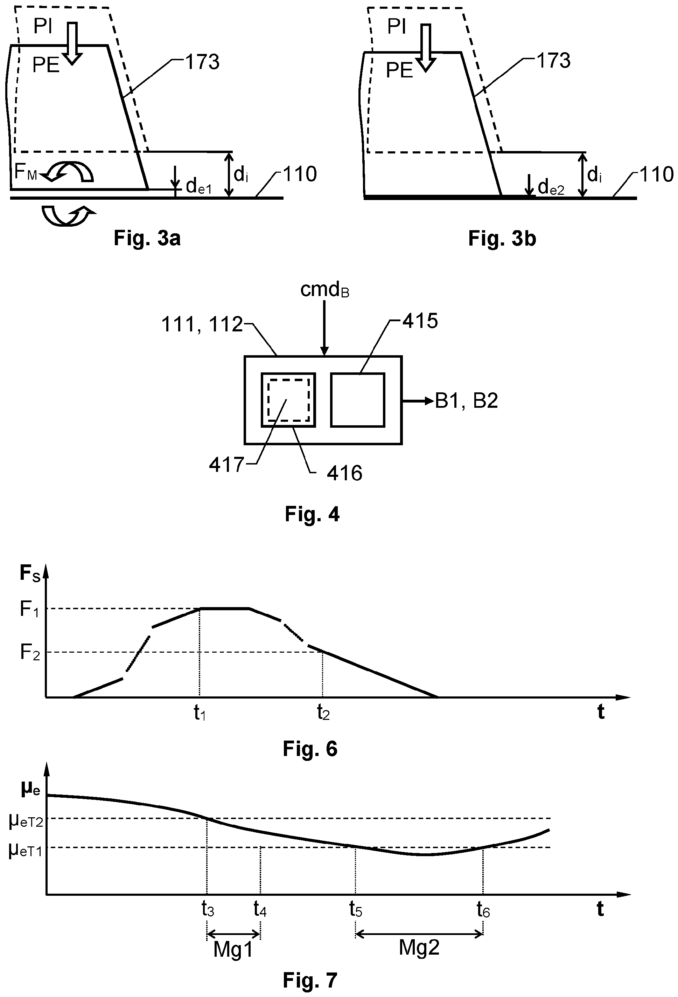

Referring now to Figures 3a and 3b, the electrically operated drivetrain 171/172 is configured to receive the first control signal M and based thereon move the magnetic track brake device 173 towards a rail 110 upon which the rail vehicle 100 travels such that the magnetic track brake device 173 moves from an idle position PI to an engaged position PE.

In the idle position PI, the magnetic track brake device 173 is at a first distance dᵢ relatively far from the rail 110 and in the engaged position PE, the magnetic track brake device 173 is at a second distance dₑ₁ or dₑ₂ respectively from the rail 110, which second distance dₑ₁/dₑ₂ is substantially shorter than the first distance dᵢ.

According to one embodiment of the invention, in response to the brake command cmd_{B}, the magnetic track brake controller 160 is configured to generate the first control signal M, such that in the engaged position PE, the second distance dₑ₁ is larger than zero, and an electric current mi is passed through an inductive coil element 175 of the magnetic track brake device 173.

The second distance dₑ₁ is relatively short, say in the order of 1 mm to 10 mm, preferably around 5 mm. The electric current mi produces a magnetic flux F_{M} through the magnetic track brake device 173. Due to the short distance between magnetic track brake device 173 and the rail 110 a large portion of the magnetic flux F_{M} also passes through the rail 110 beneath the rail vehicle 100. This increases an attractive force between the rail vehicle 100 and the rail 110 and enhances an adhesion between the at least one wheel 101 and 102 respectively and the rail 110. In other words, a higher brake force may be applied to the wheels 101 and 102 before the wheels lock-up and start to slip against the rail 110 than if no magnetic flux F_{M} had been present.

According to one embodiment of the invention, in response to the brake command cmd_{B}, the magnetic track brake controller 160 is instead configured to generate the first control signal M, such that in the engaged position PE, the second distance dₑ₂ is zero, i.e., the magnetic track brake device 173 makes contact with the rail 110, and no electric current is passed through the inductive coil element 175 of the magnetic track brake device 173. Consequently, no increased attractive force occurs between the rail vehicle 100 and the rail 110. However, the magnetic track brake device 173 may for example efficiently scrape off leaves, debris and similar items from the rail 110. Preferably, inter alia to avoid damaging the rail 110, the magnetic track brake device 173 is pushed at relatively low the force against the rail 100. Moreover, to avoid damaging the rail infrastructure, it is advantageous if this form of braking is avoided when passing switches or track joints.

In Figure 1, the magnetic track brake device 173 is arranged between the first and second wheel pairs of a bogie. It should be noted that, of course, the magnetic track brake device 173 may equally well arranged in front of the frontmost wheel pair, behind the rearmost wheel pair, or even at a location separated from the bogie.

Moreover, when operating the rail vehicle 100 in snowy/icy conditions snow and/or ice may be formed on various parts of the magnetic track brake device 173. To remove such snow and/or ice it is advantageous if the magnetic track brake controller 160 is configured to generate the first control signal M so that the magnetic track brake device 173 is intermittently moved up and down between the idle position PI and a position closer to the rail 110, for example one of the engaged positions PE. This movement of the magnetic track brake device 173 is preferably carried out in response to a deicing criterion being fulfilled, and may either be combined with effecting a braking operation, or without performing any of the above-described braking operations.

Figure 2 shows a schematic illustration of a rail vehicle 100, which includes a second embodiment of the system according to the invention. In Figure 2, all entities, signals and commands that are also shown in Figure 1 designate the same entities, signals and commands as discussed above with reference to Figure 1.

In Figure 2, in addition to the at least one magnetic track brake controller 160 and at least one magnetic track brake unit 170, the braking system also contains at least one brake controller, here exemplified by 111 and 112 respectively and at least one brake unit, here exemplified by 121 and 122 respectively.

Each of the brake controllers 111 and 112 is configured to receive the brake command cmd_{B} and in response thereto generate a respective first control signal B1 and B2.

Each of the brake units 121 and 122 includes an electric motor 131 and 132 respectively, a gear arrangement 141 and 142 respectively, and at least one pressing member, here exemplified by 151 and 152 respectively, which may be constituted by a pair of calipers or a brake shoe of a brake drum. Each of the brake units 121 and 122 is configured to receive the first control signal B1 and B2 respectively, and based thereon cause the electric motor 131 and 132 respectively to act on the gear arrangement 141 and 142 respectively, such that the pressing members 151 and 152 respectively apply a braking force to a rotatable member that is mechanically linked to at least one wheel, here 101 and 102 respectively of the rail vehicle 100 so as to reduce a rotation speed of the at least one wheel 101 and 102. The at least one pressing member 151 and 152 may either be configured to press directly against the respective wheel 101 and 102, or against a brake disc or brake drum that is mechanically connected thereto. Hence, the brake command cmd_{B} may jointly control magnetic track braking and wheel braking.

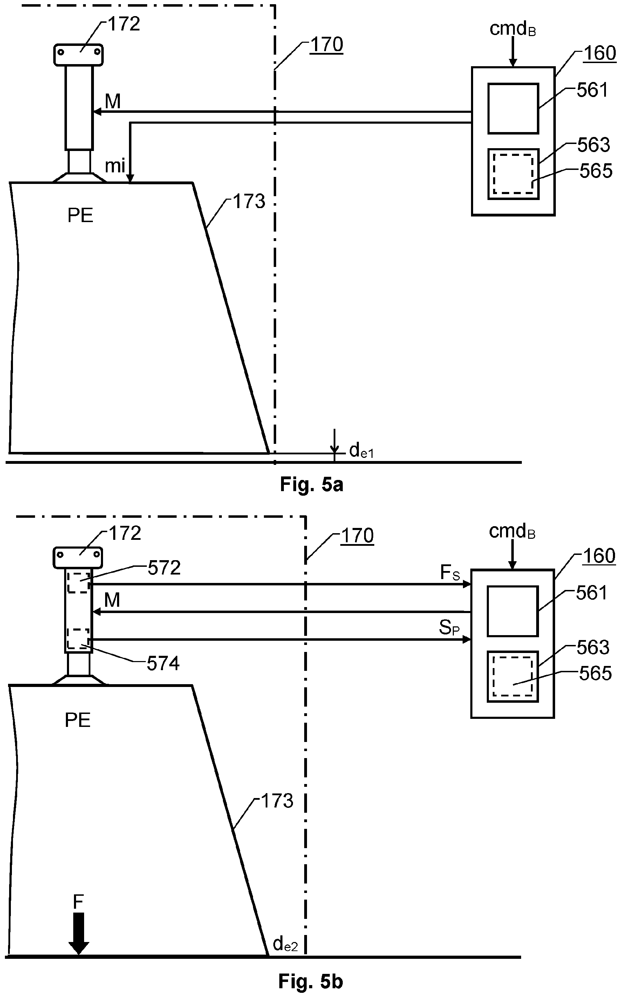

Figure 5a shows the magnetic track brake controller 160 and the magnetic track brake unit 170 and illustrates the signals that are exchanged between these units when the magnetic track brake device 173 is controlled to the first engaged position PE.

Here, in response to the brake command cmd_{B}, the magnetic track brake controller 160 generates such a first control signal M, e.g. an electric current to the magnetic track brake unit 170 that the pair of cylinder-push rod devices 171 and 172 of the electrically operated drivetrain move the magnetic track brake device 173 from the idle position PI to the first engaged position PE, where the second distance dₑ₁ is larger than zero. In connection with this, preferably after that the magnetic track brake device 173 has reached the first engaged position PE, the magnetic track brake controller 160 also causes such an electric current mi to be passed through the inductive coil element 175 of the magnetic track brake device 173 that a particular magnetic flux F_{M} passes through the magnetic track brake device 173 and the rail 110. Roughly speaking, the magnetic flux F_{M} is proportional to the electric current mi. Thus, it is straightforward to control the magnetic flux F_{M} via the electric current mi. For simplicity, Figure 5a shows that the magnetic track brake controller 160 produces the electric current mi as such. It should be noted that this, however, is merely one possibility out of many alternatives. For example, it is envisaged that the electric current mi may instead be produced by a separate unit, and the magnetic track brake controller 160 instead is configured to control this unit via the first control signal M.

Figure 5b illustrates the signals that are exchanged between the magnetic track brake controller 160 and the magnetic track brake unit 170 according to one embodiment of the invention when the magnetic track brake controller 160 controls the magnetic track brake device 173 to the second engaged position PE.

Here, in response to the brake command cmd_{B}, the magnetic track brake controller 160 generates such a first control signal M, e.g. an electric current to the magnetic track brake unit 170 that the pair of cylinder-push rod devices 171 and 172 of the electrically operated drivetrain move the magnetic track brake device 173 from the idle position PI to the first engaged position PE, where the second distance dₑ₂ is zero, i.e. the magnetic track brake device 173 makes contact with the rail 110, so that for example leaves, debris and similar may be scraped off there from.

To ensure that: (i) the magnetic track brake device 173 reaches the rail 110, and (ii) the electrically operated drivetrain does not push the magnetic track brake device 173 too hard against the rail 110, the magnetic track brake unit 170 preferably includes, or is associated with a force sensor 572. The force sensor 572 is configured to produce a pressure signal Fs indicating a magnitude of a force F at which the magnetic track brake device 173 contacts the rail 110 when the magnetic track brake device 173 is in the engaged position PE and the second distance dₑ₂ is zero. For instance, each of the cylinder-push rod devices 171 and 172 of the electrically operated drivetrain may include a respective electric motor. If so, it is generally advantageous if at least one of these electric motors is combined with the position sensor 574. Namely, for compactness, robustness and cost-efficiency, the force sensor 572 is preferably integrated in the electrically operated drivetrain 171/172. According to embodiments of the invention, the force sensor 472, in turn, contains a load cell and/or a wire strain gauge to register the magnitude of the above-mentioned force F.

A position sensor 574 is configured to produce a positioning signal S_{P} reflecting a distance that the electrically operated drivetrain 171/172 has moved the magnetic track brake device 173. According to embodiments of the invention, the position sensor 574 may either be a component separate from the electrically operated drivetrain 171/172, or a component that is integrated therein, and which for example forms an integral part of one or both of the cylinder-push rod devices 171 and/or 172. The position sensor 574, in turn, may include an LVDT sensor, a linear potentiometer and/or an optical position sensor that registers the movements.

According to one embodiment of the invention, the magnetic track brake controller 160 is configured to obtain the pressure signal Fs and the positioning signal S_{P}. Based on these signals, the magnetic track brake controller 160 is further configured to define the idle position PI for the magnetic track brake device 173.

Referring now to Figure 6, we will explain how the idle position PI for the magnetic track brake device 173 may be defined according to embodiments of the invention. Figure 6 shows a diagram illustrating how the pressure signal Fs that indicates the force F at which the magnetic track brake device 173 is pushed against the rail 110 may vary over time t while the magnetic track brake controller 160 controls magnetic track brake device 173 to make contact with the rail 110.

Specifically, the magnetic track brake controller 160 may be configured to define the idle position PI by executing the steps:
(a) controlling the electrically operated drivetrain 171/172 to move the magnetic track brake device 173 in a first direction, i.e. towards the rail 110 until the pressure signal Fs exceeds a first threshold value F₁. In Figure 5, this occurs at a point in time t₁.

Thereafter, the magnetic track brake controller 160 is configured to: (b) control the electrically operated drivetrain 171/172 to stop, and subsequently
(c) control the electrically operated drivetrain 171/172 to retract the magnetic track brake device 173 from the rail 110 by controlling the electrically operated drivetrain 171/172 to move the magnetic track brake device 173 in a second direction that is opposite to the first direction, i.e. up from the rail 110 until the positioning signal S_{P} indicates that the magnetic track brake controller 160 has moved the first distance in the second direction. In Figure 6, this occurs at a point in time t₂.

Moreover, according to one embodiment of the invention, between steps (b) and (c), the magnetic track brake controller 160 is configured to retract the magnetic track brake device 173 from the rail 110 until the pressure signal Fs falls below a second threshold value F₂ that is lower than the first threshold value F₁. This may be equivalent to that the magnetic track brake device 173 makes such contact against the rail 110 that any debris thereon is expected to be scraped off by the magnetic track brake device 173, however there is a low risk that the damage is made to the rail 110.

Once the idle position PI has been defined for the magnetic track brake device 173, at the idle position PI, the first distance dᵢ represents such a positioning of the electrically operated drivetrain 171/172 that from the idle position PI the magnetic track brake device 173 is moveable to the engaged position PE, where the second distance dₑ₂ is zero by controlling the electrically operated drivetrain 171/172 to move in the first direction, i.e. down towards the rail 110 until the positioning signal S_{P} indicates that the magnetic track brake controller 160 has moved a first predefined distance, say in the order of 50 mm to 150 mm.

According to one embodiment of the invention, the magnetic track brake controller 160 is configured to control the magnetic track brake device 173 to the engaged position PE, where the second distance dₑ₁ is larger than zero by controlling the electrically operated drivetrain 171/172 to move the magnetic track brake device 173 in the first direction until the positioning signal S_{P} indicates that the magnetic track brake controller 160 has moved a second predefined distance, which is smaller than the first predefined distance, i.e. to a level being higher above the rail 110 than where the second distance dₑ₂ is equal to zero.

Figure 7 shows a diagram illustrating how an estimated friction coefficient µₑ may vary over time t, and how, in response to that, the magnetic track brake device 173 may be controlled by the magnetic track brake unit 170 according to one embodiment of the invention. Referring also again to Figure 1, according to this embodiment of the invention, each of the brake units 121 and 122 respectively further comprises at least one auxiliary sensor, which is configured to produce a feedback signal FB1 and FB2 that is indicative of at least one adhesion parameter of a contact interface between the wheels 101 and 102 respectively and the rail 110 while the at least one pressing member 151 and 152 respectively applies the braking force to the rotatable member that is mechanically linked to the respective wheel 101 and 102.

The feedback signals FB1 and FB2 may be generated by applying a respective brake force to a respective wheel axle of the rail vehicle 100 so as to cause retardation of the rail vehicle 100 according to a particular procedure. For example, the brake units 121 and 122, or another unit that is communicatively connected thereto, is configured to obtain a first wheel speed signal indicating a rotational speed of at least one first wheel of the rail vehicle's 100 wheel axles to which a first brake unit is configured to apply a brake force. Said unit is further configured to obtain a second wheel speed signal indicating an average rotational speed of at least one second wheel on at least one second wheel axles to which at least one second brake unit is configured to apply a respective brake force. Said unit is further configured to produce a control signal to the first brake unit such that this unit applies a gradually increasing brake force to the first wheel axle until an absolute difference between the first and second wheel speed signals exceeds a threshold value. In response to the absolute difference exceeding the threshold value, said unit is configured to determine a parameter reflecting a friction coefficient between the wheels and the set of rails upon which the rail vehicle 100 travels.

The magnetic track brake controller 160 is configured to receive the feedback signal(s) FB1 and/or FB2 and on the further basis thereof generate the first control signal M.

According to one embodiment of the invention, if the feedback signal(s) FB1 and/or FB2 is(are) indicative of an estimated friction coefficient µₑ between the wheels 101 and 102 respectively and the rail 110, and if the estimated friction coefficient µₑ subceeds a first threshold level µ_{eT1}, the magnetic track brake controller 160 is configured to generate the first control signal M such that the magnetic track brake device 173 attains the engaged position PE, where the second distance dₑ₁ is larger than zero and the electric current mi is passed through the inductive coil element 175 of the magnetic track brake device 173. In Figure 6, this occurs at a point in time t₅. The electric current mi produces the magnetic flux F_{M} through the magnetic track brake device 173 and the rail 110 so that the attractive force between the rail vehicle 100 and the rail 110 increases. In Figure 7, this takes place during a period Mg2 from the point in time t₅ until a later point in time t₆.

Preferably, when the magnetic track brake device 173 is in the engaged position PE, where the second distance dₑ₁ is larger than zero, the magnetic track brake controller 160 is configured to generate the first control signal M so that the electric current mi being passed through the inductive coil element 175 of the magnetic track brake device 173 has such a value that a magnitude of the magnetic flux F_{M} through the magnetic track brake device 173 and the rail 110 is a function of how much the estimated friction coefficient subceeds the first threshold level µ_{eT1}. Referring to Figure 6, the magnetic track brake controller 160 may for example control the magnetic flux F_{M} in this way during the period Mg2.

According to one embodiment of the invention, if the estimated friction coefficient µₑ subceeds a second threshold level µ_{eT2}, which preferably is above the first threshold level µ_{eT1}, the magnetic track brake controller 160 is configured to generate the first control signal M such that the magnetic track brake device 173 attains the engaged position PE, where the second distance dₑ₂ is zero and no electric current mi is passed through the inductive coil element 175 of the magnetic track brake device 173. In Figure 6, this is assumed to occur at a point in time t₃ prior to the point in time t_{5\}. Hence, the magnetic track brake device 173 may for example clear the rail 110 from leaves and/or debris in a first attempt to improve the adhesion conditions for the wheels 101 and 102 during a period Mg1 from the point in time t₃ until a later point in time t₄.

According to one embodiment of the invention, in contrast to the above application of a gradually increased brake force and/or enhanced wheel adhesion, if the brake command cmd_{B} represents an automatically activated brake request or an operator-initiated emergency brake request, the brake controllers 111 and 112 and the magnetic track brake controller 160 are configured to produce the largest possible brake force at minimal latency. To this aim, in response to receiving such a brake command cmd_{B}, each of the brake controllers 111 and 112 is configured to generate the first control signal B1 and B2 respectively such that each of the brake units 121 and 122 controls the at least one pressing member 151 and 152 respectively to apply a maximum braking force to the rotatable member that is mechanically linked to the wheels 101 and 102 respectively. Analogously, the magnetic track brake controller 160 is configured to generate the first control signal M such that the magnetic track brake device 173 attains the engaged position PE, where the second distance dₑ₂ is zero and such an electric current mi is passed through the inductive coil element 175 that a maximum magnetic flux F_{M} is produced through the magnetic track brake device 173 and the rail 110. Consequently, a highest possible braking force is applied immediately.

Figure 4 shows a schematic block diagram of the brake controllers 111 and 112 respectively according to one embodiment of the invention. Figures 4a and 4b show corresponding block diagrams of the magnetic track brake controller 160. It is generally advantageous if the brake controllers 111 and 112 and the magnetic track brake controller 160 are configured to effect the above procedure in an automatic manner by executing one or more computer programs. Therefore, each of the brake controllers 111 and 112 and the magnetic track brake controller 160 may include a respective processing unit 415 and 561 respectively and a respective memory unit 416 and 563 respectively, i.e. non-volatile data carrier, storing a respective computer program 417 and 565 respectively, which, in turn, contains software for making the processing unit 415 and 561 respectively execute the actions mentioned in this disclosure when the computer program 417 and 565 respectively is run on the processing unit 415 and 561 respectively.

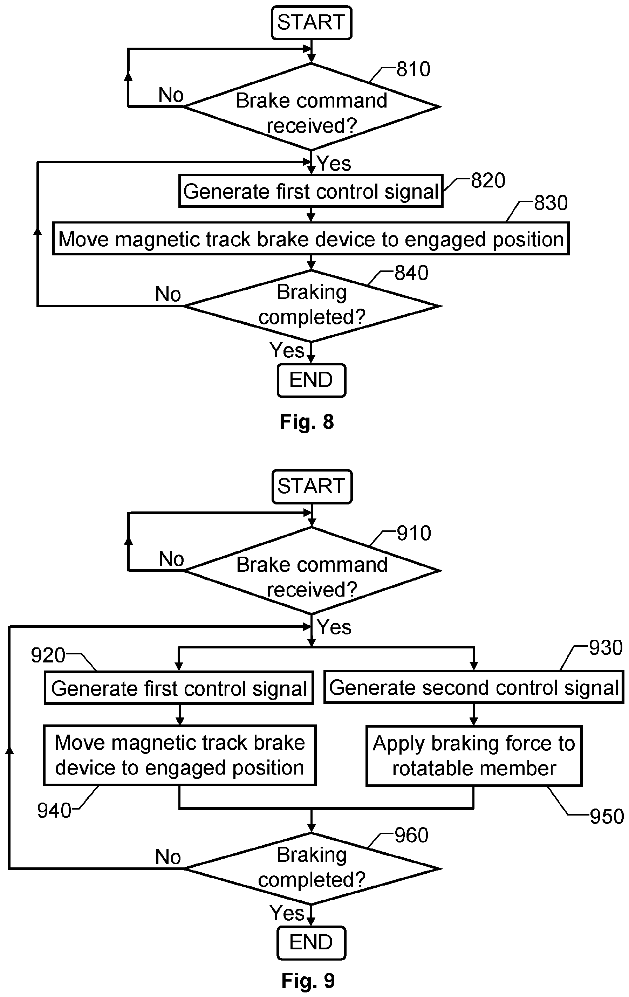

In order to sum up, and with reference to the flow diagram in Figure 8, we will now describe the computer-implemented method according to the invention of decelerating a rail vehicle.

In a first step 810, it is checked if a brake command has been received, which brake command may prescribe any kind of magnetic track braking operation to be effected, e.g. an operator-initiated service brake request, an operator-initiated emergency brake request, an automatically activated service brake request or an automatically activated emergency brake request. If no brake command is received, the procedure loops back and stays in step 810; and otherwise, a step 820 follows.

In step 820, a first control signal is generated, typically in each magnetic track brake controller that received the brake command. In a subsequent step 830, the first control signal is received in at least one magnetic track brake unit, and as a result, the at least one magnetic track brake unit controls at least one magnetic track brake device to move towards a rail upon which the rail vehicle 100 travels from an idle position to an engaged position. As described above, this imposes a retarding force on the rail vehicle 100.

After step 830, a step 840 checks if the braking operation has been completed, e.g. if a desired target speed has been reached or if the rail vehicle has come to a stop. If so, the procedure ends; and otherwise, the procedure loops back to step 820for continued braking.

The flow diagram of Figure 9 describes a computer-implemented method according to one embodiment of the invention that allows blending of magnetic track braking and wheel braking. In a first step 910, it is checked if a brake command has been received, which brake command may prescribe any kind of braking operation to be effected, e.g. an operator-initiated service brake request, an operator-initiated parking brake request, an operator-initiated emergency brake request, an automatically activated service brake request, an automatically activated parking brake request or an automatically activated emergency brake request. If no brake command is received, the procedure loops back and stays in step 910; and otherwise, parallel steps 920 and 930 follow.

In step 920, a first control signal is generated, typically in each magnetic track brake controller that received the brake command. In a subsequent step 950, the first control signal is received in at least one magnetic track brake unit, and as a result, the at least one magnetic track brake unit controls at least one magnetic track brake device to move towards a rail upon which the rail vehicle 100 travels from an idle position to an engaged position. As described above, this imposes a retarding force on the rail vehicle 100.

In step 930, a second control signal is generated, typically in each of the brake controller that received the brake command. In a subsequent step 940, the second control signal is received in at least one brake unit, and as a result, the at least one brake unit applies a braking force to a rotatable member that is mechanically linked to at least one wheel of the rail vehicle 100. Consequently, a rotation speed of the at least one wheel is reduced, and the rail vehicle 100 retards.

After steps 940 and 950, a step 960 checks if the braking operation has been completed, e.g. if a desired target speed has been reached or if the rail vehicle has come to a stop. If so, the procedure ends; and otherwise, the procedure loops back to steps 920 and 930 for continued braking.

It should be noted that, depending on what is prescribed by the brake command, operation of the magnetic track brake units and the brake units may be blended in varying proportions throughout a braking procedure.

All of the process steps, as well as any sub-sequence of steps, described with reference to Figures 8 and 9 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, however, may be varied freely within the scope of the claims. Any subject-matter falling outside the scope of the claims is provided for information purposes, only.

## Claims

1. A braking system for a rail vehicle (100), which braking system comprises:
a magnetic track brake controller (160) configured to receive a brake command (cmd_{B}) and in response thereto generate a first control signal (M); and
a magnetic track brake unit (170) comprising an electrically operated drivetrain (171, 172) and a magnetic track brake device (173), which electrically operated drivetrain (171, 172) is configured to receive the first control signal (M) and based thereon move the magnetic track brake device (173) from an idle position (PI) to an engaged position (PE), wherein in the idle position (PI) the magnetic track brake device (173) is at a first distance (dᵢ) from a rail (110) upon which the rail vehicle (100) travels and in the engaged position (PE) the magnetic track brake device (173) is at a second distance (dₑ₁, dₑ₂) from the rail (110), which second distance (dₑ₁, dₑ₂) is shorter than the first distance (dᵢ).

2. The braking system according to claim 1, further comprising:
a brake controller (111, 112) configured to receive the brake command (cmd_{B}) and in response thereto generate a second control signal (B1, B2); and
a brake unit (121, 122) comprising an electric motor (131, 132), a gear arrangement (141, 142) and at least one pressing member (151, 152), which brake unit (121, 122) is configured to receive the second control signal (B1, B2) and based thereon cause the electric motor (131, 132) to act on the gear arrangement (141, 142) such that the at least one pressing member (151, 152) applies a braking force to a rotatable member that is mechanically linked to at least one wheel (101, 102) of the rail vehicle (100) so as to reduce a rotation speed of the at least one wheel (101, 102).

3. The braking system according to any one of claims 1 or 2, wherein the magnetic track brake controller (160) is configured to generate the first control signal (M) such that in the engaged position (PE):
the second distance (dₑ₁) is larger than zero, and
an electric current (mi) is passed through an inductive coil element (175) of the magnetic track brake device (173), which electric current (mi) produces a magnetic flux (F_{M}) through the magnetic track brake device (173) and the rail (110) thus increasing an attractive force between the rail vehicle (100).

4. The braking system according to any one of the preceding claims, wherein the magnetic track brake controller (160) is configured to generate the first control signal (M) such that in the engaged position (PE):
the second distance (dₑ₂) is zero, and
no electric current (mi) is passed through an inductive coil element (175) of the magnetic track brake device (173).

5. The braking system according to claim 4, wherein the magnetic track brake unit (170) comprises:
a force sensor (572) configured to produce a pressure signal (Fs) indicating a magnitude of a force (F) at which the magnetic track brake device (173) contacts the rail (110) when the magnetic track brake device (173) is in the engaged position (PE) and the second distance (dₑ₂) is zero; and
a position sensor (574) configured to produce a positioning signal (S_{P}) reflecting a distance that the electrically operated drivetrain (171, 172) has moved, and
wherein the magnetic track brake controller (160) is configured to obtain the pressure signal (Fs) and the positioning signal (S_{P}), and based thereon define the idle position (PI) for the magnetic track brake device (173).

6. The braking system according to claim 5, wherein, at the idle position (PI), the first distance (dᵢ) represents such a positioning of the electrically operated drivetrain (171, 172) that from the idle position (PI) the magnetic track brake device (173) is moveable to the engaged position (PE) where the second distance (dₑ₂) is zero by controlling the electrically operated drivetrain (171, 172) to move in a first direction until the positioning signal (S_{P}) indicates that the magnetic track brake controller (160) has moved a first predefined distance.

7. The braking system according to claim 6, wherein the magnetic track brake controller (160) is configured to control the magnetic track brake device (173) to the engaged position (PE) where the second distance (dₑ₁) is larger than zero by controlling the electrically operated drivetrain (171, 172) to move the magnetic track brake device 173 in the first direction until the positioning signal (S_{P}) indicates that the magnetic track brake controller (160) has moved a second predefined distance, which is smaller than the first predefined distance.

8. The braking system according to any of claims 4 to 7, wherein the magnetic track brake controller (160) is configured to define the idle position (PI) by executing the steps:
(a) controlling the electrically operated drivetrain (171, 172) to move the magnetic track brake device (173) in the first direction until the pressure signal (Fs) exceeds a first threshold value (F₁), thereafter
(b) controlling the electrically operated drivetrain (171, 172) to stop, and subsequently
(c) retracting the magnetic track brake device (173) from the rail (110) by controlling the electrically operated drivetrain (171, 172) to move the magnetic track brake device (173) in a second direction that is opposite to the first direction until the positioning signal (S_{P}) indicates that the magnetic track brake controller (160) has moved the first distance in the second direction.

9. The braking system according to claim 8, wherein between steps (b) and (c), the magnetic track brake controller (160) is configured to:
retract the magnetic track brake device (173) from the rail (110) until the pressure signal (Fs) falls below a second threshold value (F₂) that is lower than the first threshold value (F₁).

10. The braking system according to any one of claims 5 to 9, wherein the force sensor (572) is comprised in the electrically operated drivetrain (171, 172).

11. The braking system according to any one of claims 5 to 10, wherein the force sensor (572) comprises one of a load cell and a wire strain gauge.

12. The braking system according to any one of claims 5 to 11, wherein the electrically operated drivetrain (171, 172) comprises an electric motor, which is combined with the position sensor (574).

13. The braking system according to any one of claims 5 to 11, wherein the position sensor (574) is a component separate from the electrically operated drivetrain (171, 172).

14. The braking system according to any one of claims 12 or 13, wherein the position sensor (574) comprises at least one of: an LVDT sensor, a linear potentiometer and an optical position sensor.

15. The braking system according to any one of claims 2 to 14, wherein:
the brake unit (121, 122) further comprises at least one auxiliary sensor configured to produce a feedback signal (FB1, FB2) indicative of at least one adhesion parameter of a contact interface between the at least one wheel (101, 102) and the rail (110) while the at least one pressing member (151, 152) applies the braking force to the rotatable member that is mechanically linked to the at least one wheel (101, 102);
the magnetic track brake controller (160) is configured to receive the feedback signal (FB1, FB2) and on the further basis thereof
generate the first control signal (M).

16. The braking system according to claim 15, wherein the feedback signal (FB1, FB2) is indicative of an estimated friction coefficient (µₑ) between the at least one wheel (101, 102) and the rail (110), and if the estimated friction coefficient (µₑ) subceeds a first threshold level (µ_{eT1}), the magnetic track brake controller (160) is configured to generate the first control signal (M) such that the magnetic track brake device (173) attains the engaged position (PE) where the second distance (dₑ₁) is larger than zero and the electric current (mi) is passed through the inductive coil element (175) of the magnetic track brake device (173), which electric current (mi) produces the magnetic flux (F_{M}) through the magnetic track brake device (173) and the rail (110) so that the attractive force between the rail vehicle (100) and the rail (110) increases.

17. The braking system according to claim 16, wherein, when the magnetic track brake device (173) is in the engaged position (PE) where the second distance (dₑ₁) is larger than zero, the magnetic track brake controller (160) is configured to generate the first control signal (M) so that the electric current (mi) being passed through the inductive coil element (175) of the magnetic track brake device (173) has such a value that a magnitude of the magnetic flux (F_{M}) through the magnetic track brake device (173) and the rail (110) is a function of how much the estimated friction coefficient subceeds the first threshold level (µ_{eT1}).

18. The braking system according to any one of claims 15 to 17, wherein if the estimated friction coefficient (µₑ) subceeds a second threshold level (µ_{eT2}), the magnetic track brake controller (160) is configured to generate the first control signal (M) such that the magnetic track brake device (173) attains the engaged position (PE) where the second distance (dₑ₂) is zero and no electric current (mi) is passed through the inductive coil element (175) of the magnetic track brake device (173).

19. The braking system according to claim 18, wherein second threshold level (µ_{eT2}) is above the first threshold level (µ_{eT1}).

20. The braking system according to any one of claims 2 to 19, wherein if the brake command (cmd_{B}) represents an automatically activated or an operator-initiated emergency brake request,
the brake controller (111, 112) is configured to generate the first control signal (B1, B2) such that the brake unit (121, 122) controls the at least one pressing member (151, 152) to apply a maximum braking force to the rotatable member that is mechanically linked to the at least one wheel (101, 102), and
the magnetic track brake controller (160) is configured to generate the first control signal (M) such that the magnetic track brake device (173) attains the engaged position (PE) where the second distance (dₑ₂) is zero and such an electric current (mi) is passed through the inductive coil element (175) that a maximum magnetic flux (F_{M}) is produced through the magnetic track brake device (173) and the rail (110).

21. The braking system according to any one of the preceding claims, wherein the brake command (cmd_{B}) represents one of:
an operator-initiated service brake request,
an operator-initiated parking brake request,
an operator-initiated emergency brake request
an automatically activated service brake request,
an automatically activated parking brake request, and
an automatically activated emergency brake request.

22. A computer-implemented method of decelerating a rail vehicle (100) comprising a magnetic track brake controller (160) and a magnetic track brake unit (170), the method comprising:
receiving the brake command (cmd_{B}) in the magnetic track brake controller (160), and in response thereto
generating a first control signal (M);
receiving the first control signal (M) in the magnetic track brake unit (170), and in response thereto, controlling an electrically operated drivetrain (171, 172) comprised in the magnetic track brake unit (170) to move the magnetic track brake device (173) from an idle position (PI) to an engaged position (PE), wherein in the idle position (PI) the magnetic track brake device (173) is at a first distance (dᵢ) from a rail (110) upon which the rail vehicle (100) travels and in the engaged position (PE) the magnetic track brake device (173) is at a second distance (dₑ₁, dₑ₂) from the rail (110), which second distance (dₑ₁, dₑ₂) is shorter than the first distance (dᵢ).

23. A computer program (417; 565) loadable into a non-volatile data carrier (416; 563) communicatively connected to at least one processor (415; 561), the computer program (417; 565) comprising software for executing the method according to claim 22 when the computer program (417; 565) is run on the at least one processor (415; 561).

24. A non-volatile data carrier (316; 463) containing the computer program (417; 565) of the claim 23.
